(19) Europäisches Patentamt
European Patent Office
Office européen des brevets

(11) Publication number: **0 452 759 A2**


(12) **EUROPEAN PATENT APPLICATION**


(21) Application number: **91105478.1**

(51) Int. Cl.5: **H04N 1/393**, H04N 1/46

(22) Date of filing: **06.04.91**

(30) Priority: **20.04.90 US 511649**

(43) Date of publication of application: **23.10.91 Bulletin 91/43**

(84) Designated Contracting States: **BE CH DE FR GB IT LI NL SE**



(71) Applicant: **Brandestini, Marco, Dr.**
**65 Kirkland Avenue 306**
**Kirkland, WA 98033(US)**

Applicant: **Ferraro, Richard F.**
**2568 NE 188th Street**
**Seattle, WA 98155(US)**

(72) Inventor: **Brandestini, Marco, Dr.**
**65 Kirkland Avenue 306**
**Kirkland, WA 98033(US)**
Inventor: **Ferraro, Richard F.**
**2568 NE 188th Street**
**Seattle, WA 98155(US)**

(74) Representative: **Blum, Rudolf Emil Ernst et al**
**c/o E. Blum & Co Patentanwälte Vorderberg 11**
**CH-8044 Zürich(CH)**


(54) **Method and apparatus for rapid scanning of color images.**


(57) A scanner system digitizes 35mm transparencies or negatives, and converts the image to a format compatible with popular microcomputer systems. This scanner system can accommodate various formats, and has variable zoom, pan and window size. Color separation is accomplished by an illumination arrangement causing rapid sequential generation of red, green and blue components. A low wattage light source is used, and color balance is achieved by adjusting the respective exposure times of the three primary colors. The system has internal calibration to achieve repeatable color balance. The system implements a wide variety of color coding schemes ranging in resolution from 1 to 24 bits. An adaptive process compresses the data in order to optimize the color selection process. The illumination optics are anamorphotic for high efficiency. Mechanical and electrical interfaces are compatible with a conventional 5-1/4" floppy disk drive standard.



EP 0 452 759 A2

This invention relates to a method and apparatus for digitizing 35mm transparencies or negatives and, more particularly, to such a method and apparatus implemented in a compact and inexpensive system component capable of being installed in a standard half-height disk drive bay in a conventional personal computer.

With the growing popularity of personal computers, a variety of applications address the needs of the graphics industry. Documents of all kinds are being converted to digital data which is manageable by electronic devices.

Within the color marketplace, there are the standard color formats applicable to both the low-end mass marketplace and the high-end specialty marketplace.

Color printers are becoming available at affordable costs, and consequently color scanners are becoming popular. The users will want and need access to color images, and in particular will want to access the images stored on color slides.

Graphics applications rely on clip art, but current clip art libraries pale in comparison to the images available on 35mm color slides. An inexpensive slide scanner is essential for users who wish to access these color images.

Objects of the present invention include provision of a scanner system which can generate a digital image from a transparency, which is compact, reliable, flexible and inexpensive, and which facilitates computer-based illustration, artwork, presentation graphics, desktop publishing and image database management.

A further object is the provision of capability to display an image with minimal delay, and preferably to effect a full color scan digitizing 480 x 640 pixels in less than ten seconds from the moment a slide starts to move into the system.

It is another object to allow a user to vary the magnification and the location of the image origin (zoom and pan capability), the zoom factor not being limited to integer multiples of the pitch of a solid-state image sensor and the zoom not being implemented in software.

A further object is the provision of a mechanical chassis with the size and shape of a conventional floppy disk drive so that the scanner can be directly installed in a conventional personal computer frame, wherein transparencies or negative strips are inserted into the system through an opening in its front panel, and power requirements of the scanner are met by the internal power (5 Volt, 12 Volt, 20 Watt maximum) supplied in popular computer systems for use by peripherals.

A further object is to provide a system which is self-calibrating, and does not require extensive warm-up periods or set-up procedures.

The objects and purposes of the invention are met by providing a method for rapid digitization of a transparency using an illumination system, an optical image forming arrangement, and a linear solid-state detection arrangement to achieve high resolution, color separation, and sizing of the image to any desired scale, including the steps of: moving the transparency at selected rate in a first direction, thus defining the scale factor in a first dimension; sampling the image data obtained through the solid-state detection arrangement at a selected sample rate in a second dimension; defocusing the image to adjust the spatial band-width to the selected sample rate; acquiring a sequence of spectral bands for every line sampled; rapidly reducing the number of colors required to faithfully represent the original image; and compensating for nonuniformities of the illumination system and the detection arrangement.

The objects and purposes of the invention are also met by providing an apparatus for rapid digitization of a transparency, including: a light source, an optical image forming element, a linear solid-state detector, a digitization arrangement for providing high resolution and full color rendition and for facilitating sizing of the image to any desired scale, a variable-feed drive mechanism which establishes a scale factor in a first dimension; an element which provides adjustable defocusing; a rate multiplier which generates a variable scale factor in a second dimension; a color separation element which extracts different spectral bands from the light source; a programmable sequencer which controls the exposure times assigned to respective spectral bands; and an arithmetic unit to convert digitized values of respective spectral bands into a palette containing a reduced number of colors.

A preferred embodiment of the present invention will be described below with reference to the accompanying drawings, in which:

Figure 1 is a flowchart representing an image digitization process effected under operator control;

Figure 2 is a block diagram of a system embodying the present invention;

Figure 3 is a diagrammatic view of a screen display of a host computer for the system of Figure 2 and facilitates set-up of parameters controlling the image digitization;

Figure 4 is a flowchart of a color compression routine which is part of the image digitization process of Figure 1;

Figure 5 is a diagrammatic perspective view of the preferred embodiment showing optical and mechanical components supported on a chassis mountable in a standard floppy disk drive bay;

Figure 5A is a sectional side view of a slide tray mechanism which is part of the apparatus of Figure 5;

Figure 6 is a diagrammatic perspective view of the optical components of the preferred embodiment which illuminate and image a transparency on a line-by-line basis;

Figure 7A is a diagrammatic sectional side view of the optical components of Figure 6, and shows a preferred arrangement to generate from an incandescent light source three spectral bands used for color separation;

Figure 7B is a diagrammatic side view of a liquid crystal device which is a component of the arrangement in Figure 7A;

Figure 7C and 7D depict an alternative embodiment of the light source shown in Figure 7A.

Figure 8 is a block diagram of a portion of a circuit of the preferred embodiment, and depicts a data path from digitized image data to an input/output port of the host computer;

Figure 9 is a timing diagram illustrating operation of the circuitry of Figure 8;

While the apparatus and method described below are directly applicable to a variety of image digitization tasks, including different formats, monochrome films or even opaque originals, the preferred embodiment applies them specifically to the digitization of 35mm color transparencies or negatives.

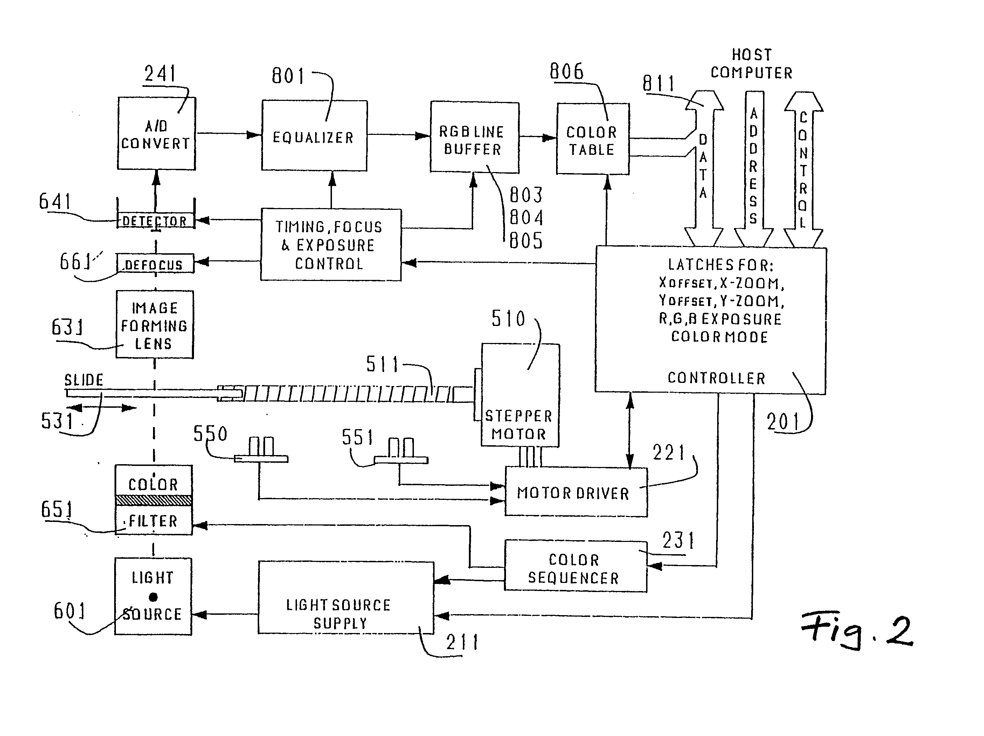

The block diagram, Figure 2, shows the architecture of the inventive system and shows the interaction of the various components in a diagrammatic fashion, which will be described in more detail below.

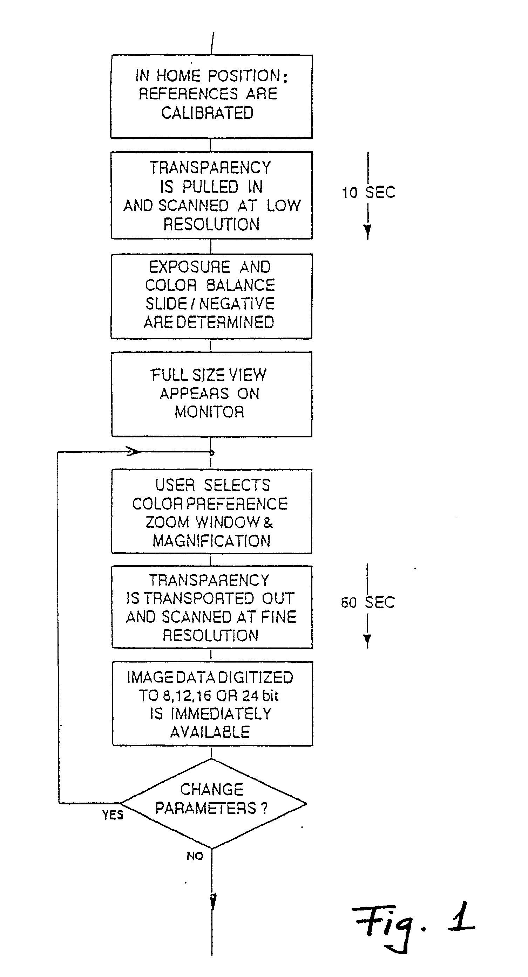

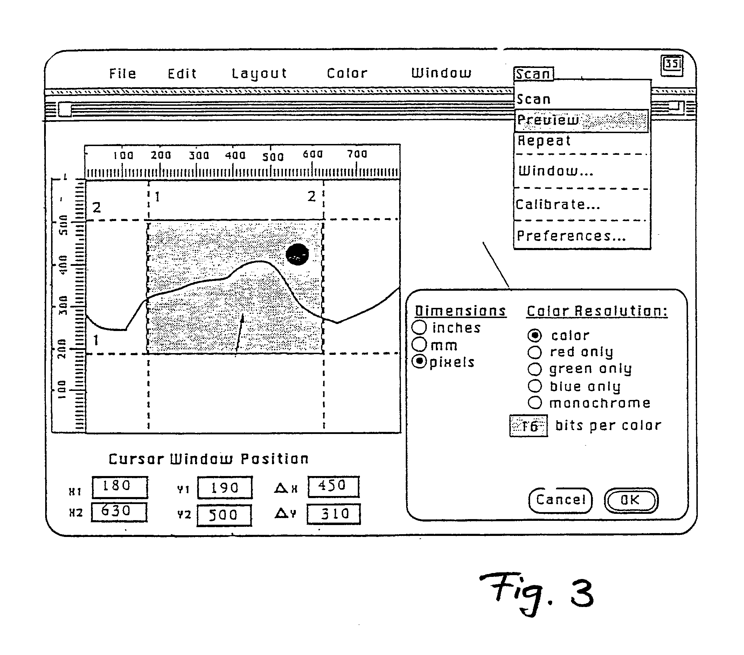

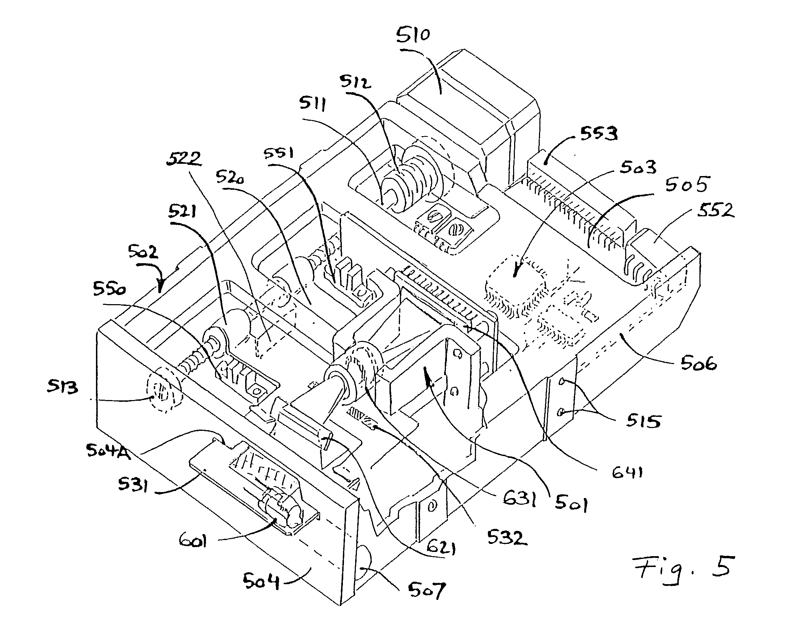

Referring first to Figure 5, in a preferred embodiment the scanner is housed in a chassis 506 having the same dimensions as a standard half-height 5-1/4" floppy disk drive. The front panel or bezel 504 has an opening 504A through which a slide or negative 531 clamped in a 50 x 50mm frame is inserted into the scanner. The scanner will pull the slide in as described in more detail below, thereby establishing optimum exposure and color balance. Generally a preview scan is accomplished as a first pass during pull-in, yielding a full size representation of the image in less than 10 seconds. Based on this representation the operator selects the portion of the image to be scanned at a higher resolution, and defines the appropriate scale factor (the number of pixels in X and Y directions). The scanning parameters are selected by using the setup window shown in Figure 3. The slide is then rescanned, the highest possible resolution being 2400 x 3600 pixels capturing the entire image. This process is schematically represented in the flow chart of figure 1.

Mechanical Design

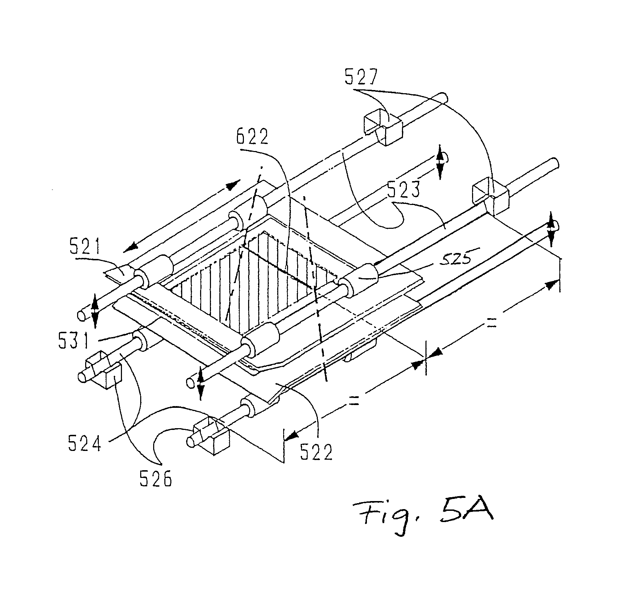

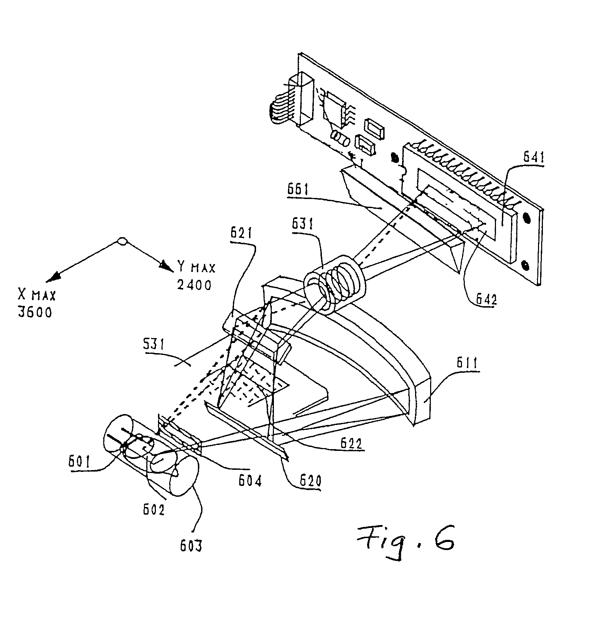

As can be seen from Figure 5 an optical portion 501, a mechanical portion 502 and an electronic portion 503 are supported by the chassis 506. The optical portion 501 is described in detail below with reference to Figure 6. The mechanical portion includes a conventional stepper motor 510 mounted on the chassis 506 and driving a lead screw 511 by means of a flexible coupling 512. The lead screw 511, which is rotationally supported at a front end on chassis 506 by a front bearing 513, positions a movably supported slide tray 520 which has two nuts 521 engaging the screw 511.

The slide tray 520 grips a slide 531 without obstructing the transparency in it in order to permit passage therethrough of an optical beam. Referring to Figure 5A, the slide tray 520 includes upper 521 and lower 522 shells or frames. The shells slide on polished rods 523 and 524 by means of small bushings 525. The lower rods 524 each pivot about a support 526 located at the front end of the mechanism. The upper rods are each supported by a bearing 527 at the back end. The supporting bearings are spaced equal distances from the focus line (indicated at 622). The line of the slide being scanned is, at any time, kept in focus regardless of the thickness of the mounting.

As shown in Figure 5, the extreme positions of the slide tray 520 are detected by front 550 and back 551 optical limit switches actuated by a lip 522 protruding from the tray. The limit switches 550 and 551 are mounted on a printed circuit board 505, which holds all the analog, digital and power electronics. The unit connects to the host computer through a power supply connector 552 and an interface connector 553 provided on the circuit board.

The mechanical operation of the unit is as follows: The slide tray 520 is disposed in a front or "home" position. With the tray 520 in the home position, a set of reference filters 532 for color and density are positioned in the optical path.

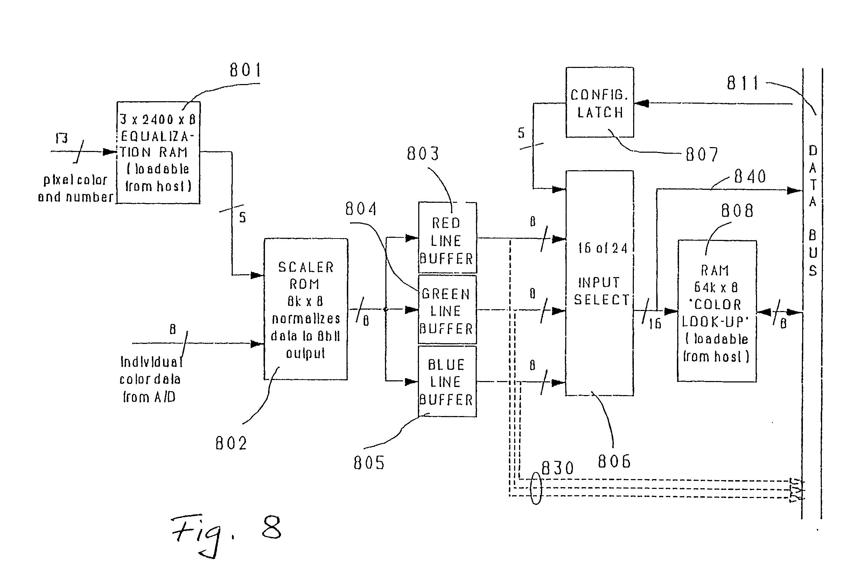

By scanning the reference filters, the color balance can be obtained, because the characteristics of the filters are preset. The routine compares the three resulting values against a standard set of R/G/B (red/green/blue) values. It then loads the equalization RAM 801 in Figure 8, such that the three colors are properly balanced (as discussed in more detail later).

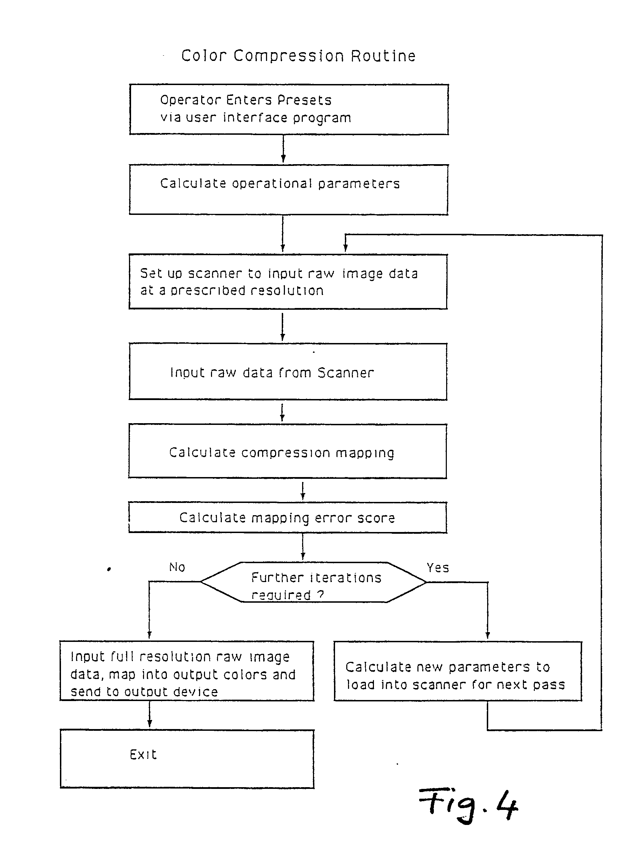

The motor 510 then pulls the tray 520 carrying slide 531 in, at a rate determined by a selected zoom factor discussed later. A first scan is done during pull-in and is used by the program to optimize the color palette. When slowly moving the slide out again, a second scan is performed which applies the optimized data. This process can be iterated, as shown in Figure 4, to achieve the optimum color assignment.

The components of the optical portion 501 are shown in more detail in Figure 6, and include: a conventional light source 601, a toroidal mirror 611, an upper folding mirror 621, a lens assembly 631, and a conventional CCD sensor 641 for the image forming path.

Illumination Optics

Figure 6 shows the illumination and image forming optics used in the preferred set-up. The purpose of the illumination optics is to generate a narrow line of concentrated light onto a line or swath 622. This feature makes the most efficient use of the light source, resulting in a compact and low-wattage system. A requirement is that the light bundle converge and fill the aperture of the image forming lens 631.

In Figure 6, the light source 601 includes a tungsten halogen lamp with an axial filament 602. The light bulb is centered in a cylindrical housing 603. An exit slit 604 is machined into the side of the housing 603 facing the convex toroidal mirror 611.

The light from bulb 601 exiting slit 604 travels to mirror 611 and is reflected and focused, is then reflected by mirror 620 and converges to a line on the transparency at 622, then travels to and is reflected by mirror 621, travels through image forming lens 631, and is focused as a line on sensor 641.

The convex mirror 611 is of toroidal design, i.e. it has two different axes of curvature.

Image Forming Optics

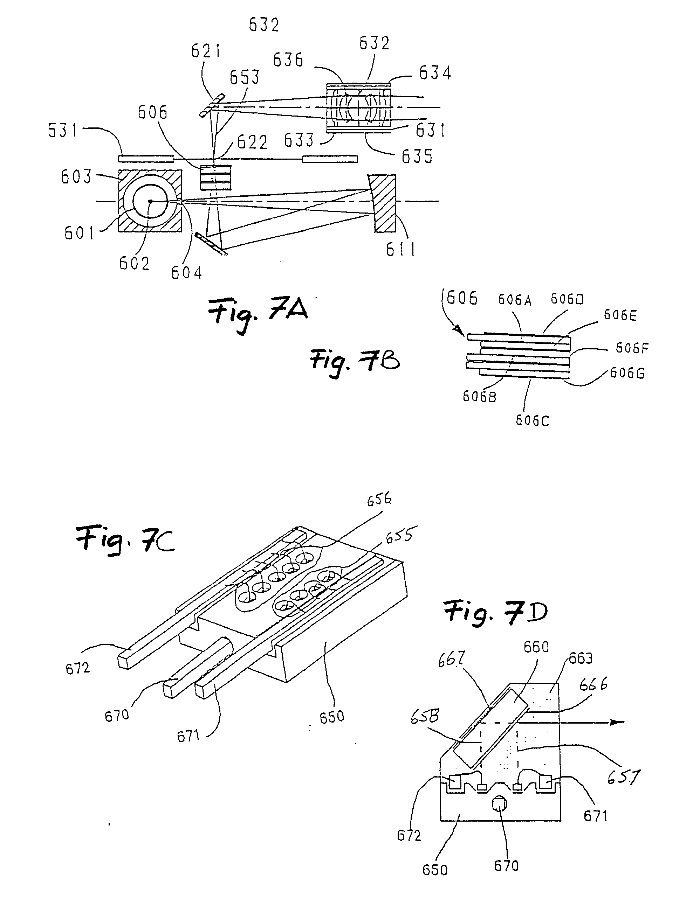

The light, after passing through the slide 531 is directed to the imaging lens 631 by the upper first-surface mirror 621. As shown in Figure 7A, the imaging lens 631 is symmetrical and has two identical outer elements 633 and 634 and two symmetrical doublets 635 and 636. An aperture stop 632 is located at the center of the system.

The line image is formed on the CCD sensor 641 (Figure 6), which converts the detected intensity to a proportional analog voltage.

Color Separation

According to the goals set forth, it is desirable to generate the three primary colors in a rapid sequence, that is, a red/green/blue triple, for each scan line.

Color separation could be accomplished by a spinning color wheel, which contains sectors of the appropriate filters.

In another color separation scheme, this color separation filter arrangement has been replaced in the embodiment of Figure 7B with a sandwich 606 of liquid crystal cells and polarizers inserted into the illumination path. In particular, referring to Figure 7B, the sandwich element 606 has three liquid crystal cells 606A-606C and four polarizers 606D-606G. The cells correspond to the three primary colors and are independently selectable.

Solid state illumination

Since virtually all the light emanating from the source is directed onto the sensor, an interesting illumination concept becomes feasible in a further embodiment of the invention.

In particular, solid state light emitting diodes can partly or wholly replace the incandescent filament/filter combination described above.

Diodes offer two distinct advantages over a filament or discharge lamp:

1. Their entire output energy falls into a well defined visible band, which makes them both efficient and stable sources.
2. Switching times for LEDs are typically in the microsecond range, ideal for generating the rapid red/green/blue sequence needed in the inventive system.

A very elegant approach for tri-color illumination has been devised using red and green and blue LEDs. Figure 7C shows this arrangement.

Blue LEDs are new, but are commercially available from Siemens, Sanyo, Panasonic and Cree. It will be recognized that the source 602 in Figure 2 can be replaced by red, green and blue diode chips arranged in a row, thereby yielding a light source assembly which is completely solid state.

Such an embodiment is shown in Figures 7C and 7D. A plurality of red, green and blue 150 x 150 micron LED die are mounted in individual, reflective recesses arranged in two rows on a common substrata 650, namely a row 655 of blue LEDs and a mixed row 656 of green and red LEDs. The length of each row is selected so that the image of the source fills the aperture of the imaging lens 631. It should be noted that the linear source geometry is functionally similar to the elongate filament 602 of the incandescent bulb 601. The toroidal mirror 611 will superimpose the individual beams of light 622 generated by the respective LEDs.

The mirror 660 and the light source are encapsulated in an optical grade epoxy 663. The mirror is a blue dichroic matched to the index of the encapsulant.

The majority of the blue light is reflected at the first dichroic surface 666 of the mirror 660, while the red/green light will pass that surface and be reflected from the back surface which has been coated with an aluminum layer 667. The separate bands combine at the front surface, so that, when looking into the light source, one sees a strip of essentially white light.

The assembly has three leads, namely the common 670 which is connected to the substrata 650, the blue 671 connected to the anodes of the blue LEDs and the red/green lead 672. The LED elements are wire-bonded to the leads. The red and green LEDs are mounted with opposing polarities, so that a bipolar current driver can drive each color separately.

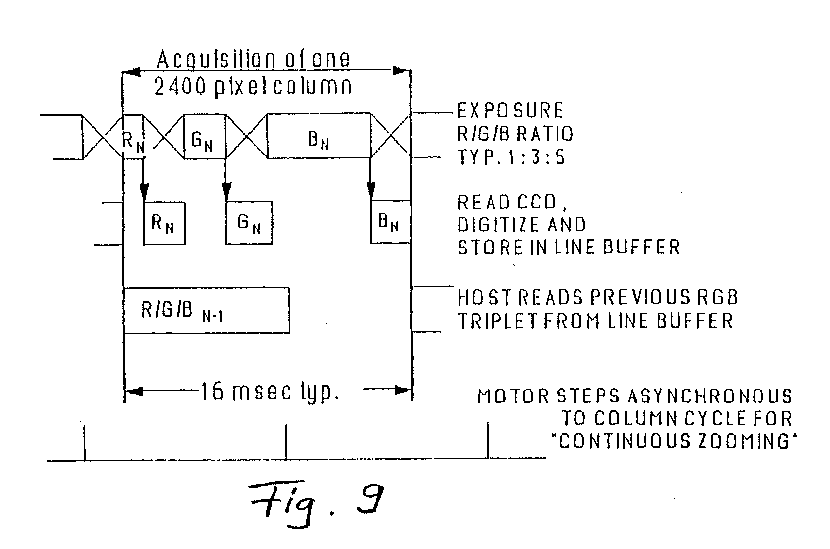

The liquid crystal valve 606 of Figure 7A and the LEDs 655, 656 of Figure 7C must be operationally synchronized to the CCD sensor 641 (Figure 6) which is done by the color sequencer 231. Figure 9 is a self explanatory timing diagram showing the basic synchronization required.

Color Calibration and Equalization

For the sake of this description, separation into three primaries, namely red (typically 750..585nm), green (typically 575..505nm) and blue (typically 495..400nm), is referred to. Separation into other bands can be advantageous for some specific applications.

The net amounts of light intensity for the three bands (red/ green/ blue) could, for example, have the ratio 10:5:1. By allotting a 10 times longer exposure time interval to the blue and a 5 times longer exposure interval to the green in comparison to the red, this unbalance is compensated.

Such a coarse balance is necessary primarily to compensate for the spectrum of the source or negative film. A fine adjustment for proper color balance must also be provided. Typically, a system is adjusted to yield the desired white or flesh tone.

The latest generation of solid state image sensors can be timed so as to control the effective exposure using their "integration control" input. Likewise, when using LEDs as light source the exposure can be controlled by the duration of the pulse applied to the LEDs of each individual color.

Zoom in the X Direction

A key feature of the inventive system is its ability to reduce the image from a maximum of 2400 x 3600 pixels (10 microns per pixel) to any desired scale. This scaling operation is accomplished along the X axis by adjusting the step rate of the motor 510.

The motor is controlled by the host computer with two control lines via the controller 201 and driver 221. One line establishes the direction of rotation of the motor. The other is the clock input which defines the step rate and thereby the speed in the X direction.

Zoom in the Y Direction and Data Transfer to Host

While the zoom in the X direction can be varied in a continuous fashion, in the Y direction the pixel spacing of the CCD determines the resolution. It is therefore not possible to digitally expand and contract the spacing of the samples in a continuous way. Many commercial document scanners are set for a maximum digitizing rate of 300 dots per inch (dpi). Typically, such a scanner would also allow the rates of 150, 100, 75 or 50 dpi, which are all integer multiples of the original pitch.

In the preferred embodiment a new readout scheme has been developed and realized in hardware. It allows fractional scaling, as follows.

To define a given sample rate, the host computer loads a zoom control latch with the sampling period or pitch in the controller 201. For instance, if a 45% reduction is desired, the sampling period would be 1/0.45 = 2.22... A readout rate generator has an adder, which accumulates this sampling period over one line interval, in particular by successively incrementing an accumulated count by this amount in the following fashion:

0 / 2.22 / 4.44 / 6.67 / 8.89 / 11.11 / 13.33 ...

The integer part of the output of the generator is the desired pixel.

The system must be able to zoom into a window located anywhere in the image, or in other words start reading data from a user selected point. This offset is loaded into a Y latch and from there is loaded into the adder at the beginning of each line.

Sample Rate Dependent Focus Resp. Defocus

Since in many cases the user selects for the slide to be imaged a window which corresponds to a low magnification, the resulting spatial sample rate after zoom is inadequate. Aliasing or Moiré artifacts would occur. These are undesirable and must be eliminated. One way to do so would be to sample the image at the highest resolution, given by the element spacing of the CCD, and then digitally filter and down-sample the image. This approach is cumbersome since it calls for a computationally intensive operation

In the inventive embodiment, the spatial filtering is accomplished in the optical domain. The image is artificially defocused or "blurred" before the limited resolution sampling takes place. Defocusing can be accomplished in a variety of ways.

Referring to Figure 6, one approach is to shift the sensor 641 out of the focal plane. The image forming lens 631 could be shifted in a similar fashion. In a similar fashion, the image-forming path can be lengthened or shortened by selectively inserting a prism or wedge 661 (Figure 6). Focus is adjusted by the operator based on visual judgement.

Hardware for Equalization

Along with the stated goal of rapid scanning goes the need for dedicated hardware to compensate for any non-uniformity of the signal produced by the CCD sensor.

Three sources cause significant non-uniformity in the output voltage of the sensor:

1) The illumination optics do not yield a 100% uniform irradiance along the line of focus 622. Typically, the intensity falls off toward the edges.

2) The sensor 641 itself exhibits a considerable amount of element-to-element response non-uniformity.

3) LEDs, there are spatially distinct sources. It is therefore necessary to compensate for non-uniformity on a per color basis.

The first problem could be overcome by appropriate baffles "shading" the illumination light bundle. The second problem needs a "personality module" to account for the repetitive but spatially random non-uniformity.

In the preferred embodiment a combination of a random access table 801 (Figure 8) and a read-only table 802 compensates for both effects. Figure 8 shows the relevant section of the circuit diagram. The output from the sensor, after being digitized, becomes the 8 lower address bits for an 8k x 8 ROM 802, which performs a scaling function.

The five higher address lines originate from an equalizing RAM 801. This RAM can be loaded by the host computer with calibration coefficients for each pixel and color.

Hardware for Color Look-up

The second piece of dedicated hardware is another RAM 808, which is loadable from the host. The circuit described below establishes a transform which reduces the number of input bits from 8 bits per color to a smaller number, typically 8 or 16 bits.

Up to the red line buffer 803, green line buffer 804, and blue line buffer 805, the data is a maximum of 8 bits per color. One essential feature of the system is its ability to produce this triplet in a rapid line-by-line fashion. This allows the immediate combination of the three separate colors with line buffers as opposed to page buffers. This task can be done exclusively with the hardware, by simply loading data representing the transformation formula into the color lookup table 808 and into a configuration latch 807 which controls an input selector 806.

Input data of 24 bits would require a 16M table (808), which is uneconomic. The inventive system therefore reduces the size of this table by limiting the number of input lines. For example, by reducing the number from 24 to 16, only a 64k table is needed. Of these 16 bits, a typical distribution assigns 6 bits to green, 5 bit to red and blue. If 24 bits have to be transferred to the host, on the other hand, the 8 bit lines from buffers 803-805 bypass the table 808, as shown diagrammatically at 830.

The selection and assignment of input lines to table 808 is done by the input selector (multiplexor) 806. The configuration latch 807 holds 5 bits which can provide an appropriate 2 bit select code for each multiplexor to provide a distribution such as the two just mentioned.

Alternatively, the table 808 can be located in the RAM of the host, in which case the 16 bit output of selector 806 is transferred over the data bus as shown diagrammatically at 840. The host will read each pixel (the address determined by the hard-wired read address generator). The 16-bit value read is then used as an index to address the table. The output of this table (which table is functionally identical to 808) is then the compressed color value representing the output of the inventive system. This data can then be transferred to the display memory, to disk, or to some other storage device.

In another context a purely monochrome original is scanned. In this case it is desirable to allow the selected channel to pass with full 8 bit resolution.

If full 24 bit color representation is desired, the data can be presented on a color per color sequential basis, assuming a data bus is limited to either 8 or 16 bits.

Software

A software program is used to control the scanner hardware. The software is not the focus of the present invention and is therefore not illustrated or described in detail. This software executes on a microprocessor located on the printed circuit card. Portions of the software are resident in ROM programmed into the processor. The main portion of the software is down-loaded from the host computer through one of the interfaces.

The software interacts with the host through either a serial, bidirectional parallel or SCSI interface. No software is provided for the host personal computer, but rather the scanner is compatible with several commercially available software packages.

**Claims**

**1.** A method for rapid digitization of a transparency which uses an illumination system, optical image forming means, and linear solid-state detection means, and which provides high resolution, color separation and sizing of the image to any desired scale, comprising the steps of:

moving the transparency at selected rate in a first direction thus defining the scale factor in a first dimension;

sampling the image data obtained through said solid-state detection means at a selected sample rate in a second dimension;

defocusing the image to adjust the spatial bandwidth to said selected sample rate;

acquiring a sequence of spectral bands for every line sampled;

rapidly reducing the number of colors required to faithfully represent the original image; and

compensating for non-uniformities of said illumination system and said detection means.

**2.** A method according to Claim 1, wherein the digitization, color separation and sizing are carried out by said illumination system, optical image forming means and linear solid state detection means free of software processing.

**3.** A method according to Claim 1, including the step of effecting data reduction to optimize the assignment of a color value for each pixel, comprising the steps of:

acquiring and digitizing raw input data and establishing a conversion formula;

transferring said formula to a digitizing means; and

digitizing and directly converting raw input data by utilizing said formula resident in said digitizing means.

**4.** A method according to Claim 1, including the step of causing said illumination system to produce a line focus on the transparency, and directing the maximum amount of light into an aperture of said image forming means.

**5.** A method according to Claim 1, including the step of effecting color separation by illuminating the object with different spectral bands.

**6.** A method according to Claim 1, including illumination means which effects color separation using solid state emitters.

**7.** A method according to claim 6, including the step of using as said solid state emitters red, green and blue LEDs, and the step of combining the light from said LEDs by means of a dichroic mirror.

**8.** An apparatus for the rapid digitization of a transparency, comprising: a light source, an optical image forming element, a linear solid-state detector, digitization means for providing high resolution and full color rendition and for facilitating sizing of the image to any desired scale,

a variable-feed drive mechanism which establishes a scale factor in a first dimension;

an element which provides adjustable defocusing;

a rate multiplier which generates a variable scale factor in a second dimension;

a color separation element which extracts different spectral bands from the light source;

a programmable sequencer which controls the exposure times assigned to respective said spectral bands.

**9.** An apparatus according to Claim 8, including focus means for causing light emanating from said light source to be brought to a line focus on the transparency, and means for causing essentially all such light to be collected by an aperture of the image forming element.

**10.** An apparatus according to Claim 8, wherein the light source producing different spectra is switchable and is an assembly having at least one pulsed light emitting diode.

**11.** An apparatus according to Claim 8, including a set of filters and means for inserting said filters into the optical path before actual image data acquisition in order to effect color and exposure calibration.

**12.** An apparatus according to Claim 8, including means for holding a table which is loadable from a host computer and for using said table to effect compensation for illumination and sensor element non-uniformity.

**13.** An apparatus according to Claim 8, including housing means shaped for insertion into a standard personal computer disk drive bay, and means for coupling said apparatus to a power supply in the computer.

**14.** An apparatus according to Claim 8, wherein said color separation element includes a sandwich of liquid crystal cells and polarizers which filters white light into a plurality of separate color bands.

15. An apparatus according to claim 10, wherein the light source includes red, green and blue LEDs and a dichroic mirror, which combines the light emitted from the separate LEDs.

16. An apparatus according to claim 15, wherein the light source includes a substrata having in a surface thereof facing the mirror two spaced rows of reflective recesses, including a plurality of red LEDs, a plurality of green LEDs, and a plurality of blue LEDs, the recesses of one of the rows having therein blue LEDs and the recesses of the other row having alternating red and green LEDs, the substrata and the dichroic mirror being embedded in an optical epoxy material.

IN HOME POSITION: REFERENCES ARE CALIBRATED
TRANSPARENCY IS PULLED IN AND SCANNED AT LOW RESOLUTION
10 SEC
EXPOSURE AND COLOR BALANCE SLIDE / NEGATIVE ARE DETERMINED
FULL SIZE VIEW APPEARS ON MONITOR
USER SELECTS COLOR PREFERENCE ZOOM WINDOW & MAGNIFICATION
TRANSPARENCY IS TRANSPORTED OUT AND SCANNED AT FINE RESOLUTION
60 SEC
IMAGE DATA DIGITIZED TO 8,12,16 OR 24 bit IS IMMEDIATELY AVAILABLE
CHANGE PARAMETERS ?
YES
NO

Fig. 1

HOST COMPUTER
DATA
ADDRESS
CONTROL
LATCHES FOR: XOFFSET, X-ZOOM, YOFFSET, Y-ZOOM, R,G,B EXPOSURE COLOR MODE
CONTROLLER
201
811
COLOR TABLE
806
RGB LINE BUFFER
803
804
805
EQUALIZER
801
TIMING, FOCUS & EXPOSURE CONTROL
A/D CONVERT
241
DETECTOR
641
DEFOCUS
661
IMAGE FORMING LENS
631
SLIDE
531
STEPPER MOTOR
510
511
MOTOR DRIVER
221
COLOR SEQUENCER
231
551
550
LIGHT SOURCE SUPPLY
211
COLOR FILTER
651
LIGHT SOURCE
601

Fig. 2

File
Edit
Layout
Color
Window
Scan
Scan
Preview
Repeat
Window...
Calibrate...
Preferences...
100
200
300
400
500
600
700
Dimensions
inches
mm
pixels
Color Resolution:
color
red only
green only
blue only
monochrome
16
bits per color
Cancel
OK
Cursor Window Position
X1
180
X2
630
Y1
190
Y2
500
ΔX
450
ΔY
310

Fig. 3

Color Compression Routine
Operator Enters Presets via user interface program
Calculate operational parameters
Set up scanner to input raw image data at a prescribed resolution
Input raw data from Scanner
Calculate compression mapping
Calculate mapping error score
No
Further iterations required ?
Yes
Input full resolution raw image data, map into output colors and send to output device
Calculate new parameters to load into scanner for next pass
Exit

Fig. 4

Fig. 5
510
512
511
551
520
522
521
502
550
513
504A
531
601
504
507
621
532
631
501
641
515
506
552
505
503
553

527
622
523
521
525
531
524
526
522
=
=

Fig. 5A

641
661
631
621
Y MAX
2400
X MAX
3600
642
531
611
622
601
604
620
602
603

Fig. 6

632
621
636
632
634
653
606
531
631
622
633
635
603
601
611
602
604
606
606A
606D
606E
606F
606G
606B
606C

Fig. 7A

Fig. 7B

656
655
672
670
671
650
660
667
663
666
658
657
672
671
650
670

Fig. 7C

Fig. 7D

DATA BUS
811
807
840
808
RAM
64k x 8
'COLOR
LOOK-UP'
(loadable
from host)
8
16
CONFIG.
LATCH
16 of 24
INPUT
SELECT
806
830
5
8
8
8
RED
LINE
BUFFER
GREEN
LINE
BUFFER
BLUE
LINE
BUFFER
803
804
805
8
SCALER
ROM
8k x 8
normalizes
data to 8bit
output
802
801
3 x 2400 x 8
EQUALIZA-
TION RAM
(loadable
from host)
5
13
pixel color
and number
8
Individual
color data
from A/D
Fig. 8

Acquisition of one
2400 pixel column
EXPOSURE
R/G/B RATIO
TYP. 1 : 3 : 5
READ CCD,
DIGITIZE AND
STORE IN LINE BUFFER
HOST READS PREVIOUS RGB
TRIPLET FROM LINE BUFFER
MOTOR STEPS ASYNCHRONOUS
TO COLUMN CYCLE FOR
"CONTINUOUS ZOOMING"
R N
G N
B N
R/G/B N-1
16 msec typ.


Fig. 9